# EUROPÄISCHE PATENTSCHRIFT

(11) **EP 0 649 713 B1**
(45) Veröffentlichungstag und Bekanntmachung des Hinweises auf die Patenterteilung: **13.01.1999**
(21) Anmeldenummer: 94810594.5
(22) Anmeldetag: 12.10.1994
(51) Int. Cl.: B26F 3/12, B26D 1/547, B26D 1/00, B23D 57/00

(54) **Vorrichtung zum Schneiden von Stücken aus Weichmaterial**
Apparatus for cutting pieces of soft material
Dispositif de découpage de pièces en matière molle

(30) Priorität: 25.10.1993 CH 3225/93
(43) Veröffentlichungstag der Anmeldung: 26.04.1995
(73) Patentinhaber: Scaritec AG, CH-4333 Münchwilen (CH)
(72) Erfinder: Schürch, Bruno, CH-4333 Münchwilen (CH)
(74) Vertreter: Schick, Carl

(56) Entgegenhaltungen:
- EP-A- 0 124 001
- EP-A- 0 168 345
- DE-U- 9 300 318
- US-A- 5 077 902

## Beschreibung

Die vorliegende Erfindung betrifft ein Schneidegerät gemäss Oberbegriff des Anspruchs 1.

Ein solches Schneidegerät ist aus dem DE-U-93 00 318 bekannt. Es umfasst einen Bügel mit zwei parallelen, teleskopierbaren Bügelschenkeln. Zwischen den freien Enden der beweglichen Bügelschenkelteile ist ein Schneiddraht gespannt. Die stationären Bügelschenkelteile sind an einem Ende über eine Strebe miteinander und am anderen Ende über je ein Scharnier mit einem starren Rahmen verbunden. An einem unteren Träger dieses Rahmens ist eine Führungsleiste befestigt. Für Gehrungsschnitte wird der Bügel gegenüber dem Rahmen um den Gehrungswinkel geschwenkt.

Der vorliegenden Erfindung liegt die Aufgabe Zu Grunde, ein Schneidegerät der eingangsgenannten Art derart weiter zu bilden, dass es einfacher im Aufbau ist. Diese Aufgabe wird durch die Merkmalskombination der Ansprüche gelöst.

Dadurch dass der Träger und mit ihm die Führungsleiste um eine zum Schneiddraht parallele Achse schwenkbar ist und der Bügel direkt an den Rahmenschenkeln geführt ist, entfallen die teleskopierbaren Bügelschenkel des eingangs erläuterten Standes der Technik.

Diese Aufgabe wird erfindungsgemäss durch eine Vorrichtung mit den im kennzeichnenden Teil des Patentanspruchs 1 angegebenen Merkmalen gelöst.

Weitere vorteilhafte Ausgestaltungen der Erfindung sind in den abhängigen Ansprüchen angegeben.

Im folgenden wird die Erfindung beispielsweise anhand einer Zeichnung näher erläutert. Es zeigen:
- Fig. 1: eine perspektivische Darstellung eines Schneidgerätes, das sowohl senkrecht als auch in einem Winkel zu einer Wand gerichtet werden kann,
- Fig. 2: eine Frontansicht einer Ausführung eines solchen Schneidgerätes mit einem oszillierenden Schneiddraht,
- Fig. 3: einen Schnitt im Bereich der Rollen einer Vorrichtung,
- Fig. 4: eine Frontansicht einer Ausführung eines erfindungsgemässen Schneidgerätes mit einem Heizdraht,
- Fig. 5 bis 7: eine Darstellung des Rahmens, im Seitenriss, Aufriss bzw. Grundriss,
- Fig. 8 bis 10: Detaildarstellungen des Kurbeltriebs der Ausführung mit oszillierendem Schneiddraht, und
- Fig. 11 bis 13: eine Detaildarstellung eines Sägedrahtes.

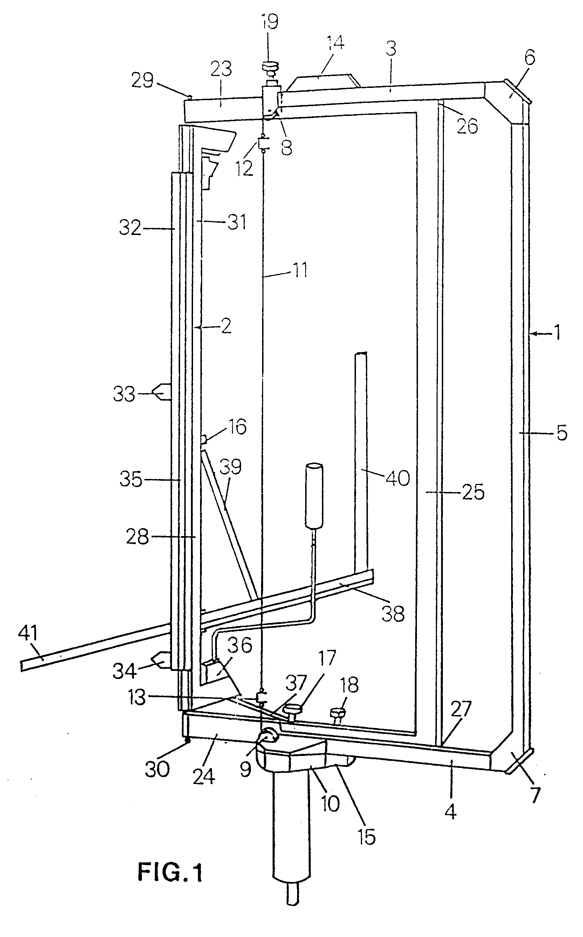

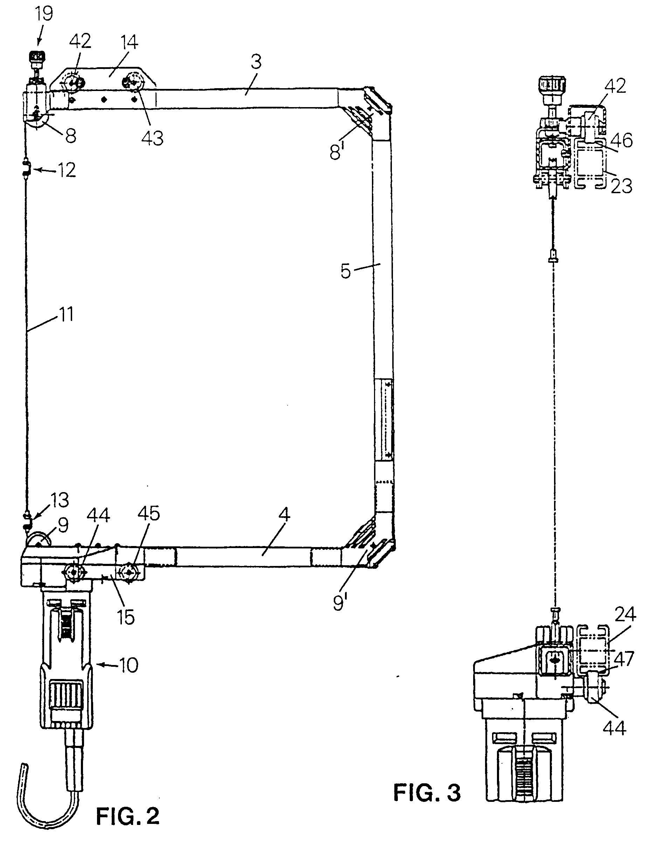

Das in Fig. 1 dargestellte Schneidgerät umfasst eine Vorrichtung 1 nach einer ersten Ausführung der Erfindung und einen Halterahmen 2. Die Vorrichtung 1, die auch Bügel genannt wird, umfasst einen Bügelrahmen, der zumindest angenähert U-förmig ausgestaltet ist und zwei parallele längliche Partien 3 und 4 und eine längliche Partie 5 aufweist, die vorzugsweise länger als die Partien 3 und 4 ist. Die Partien 3, 4 und 5 können beispielsweise längliche Profilstücke mit im wesentlichen rechteckigen Umfang sein. Die Eckverbindungen 6 und 7 zwischen den Profilstücken 3 und 5 bzw. zwischen den Profilstücken 4 und 5 sind vorzugsweise rechtwinklig ausgestaltet und inwendig mit je zwei Guss-Schalen verstärkt. An den anderen Enden der Profilstücke 3 und 5 sind je eine Rolle 8 und 9 angeordnet. Im Bereich der Rolle 9 ist am Profilstück 4 ein Gehäuse 10 mit einem Motor montiert. Im Innenbereich der Eckverbindungen 6 und 7 sind je eine, in Fig. 1 nicht sichtbare, Rolle angeordnet. Zwischen diesen vier Rollen ist ein Arbeitsdraht eingespannt, der aus einem Antriebsdraht und einem eigentlichen wirkenden Schneiddraht 11 besteht. Der Schneiddraht 11 ist etwas kürzer als die Länge des Profilstücks 5, und es sind zwei Verbindungselemente 12 und 13 vorgesehen, mit deren Hilfe Schneiddraht und Antriebsdraht in einem geschlossenen Kreis verbunden sind. Da die Profilstücke inwendig mit einer Nut oder einem Hohlraum versehen sind, kann somit der Antriebsdraht vom Verbindungselement 12 aus über die Rolle 8, innerhalb des Profilstücks 3 bis zur Rolle 8' (Fig. 2) der Eckverbindung 6, innerhalb des Profilstücks 5 bis zur Rolle 9' (Fig. 2) der Eckverbindung 7 und innerhalb des Profilstücks 4 bis zur Rolle 9 und dann bis zum Verbindungselement 13 eingespannt werden, wobei die Enden des Schneiddrahtes 11 auch an die Verbindungselemente 12 und 13 angeschlossen sind. Im Bereich der Rolle 8 ist eine Führungseinrichtung 14 mit dem Profilstück 3 und im Bereich der Rolle 9 ist eine Führungseinrichtung 15 mit dem Profilstück 4 und/oder dem Gehäuse 10 verbunden. Die Führungseinrichtungen 14 und 15 ergeben zwar eine feste Verbindung zwischen der Vorrichtung 1 und dem Halterahmen 2, erlauben jedoch eine translatorische Bewegung der Vorrichtung 1 in Bezug auf denselben.

In Fig. 1 sind auch drei Arretierungen 16, 17 und 18 sowie ein Drahtspanner 19 dargestellt.

Der Halterahmen 2 (Fig. 1) ist zweiteilig ausgestaltet. Der eine Teil ist zumindest angenähert ein U-förmiger Trägerrahmen mit zwei parallelem länglichen Partien 23 und 24 und einer länglichen Partie 25, die vorzugsweise länger als die Partien 23 und 24 ist. Die Partien 23, 24 und 25 können beispielsweise längliche Profilstücke mit im wesentlichen rechteckigem Umfang sein. Die Eckverbindungen 26 und 27 zwischen den Profilstücken 23 und 25 bzw. zwischen den Profilstücken 24 und 25 sind vorzugsweise rechtwinklig ausgestaltet. Zwischen den anderen Enden der Profilstücke 23 und 24 ist ein länglicher Träger 28 drehbar eingefügt. Zu diesem Zweck ist zwischen dem einen Ende des Trägers 28 und dem freien Ende des Profilstücks 23 eine Drehachse 29 und zwischen dem anderen Ende des Trägers 28 und dem freien Ende des Profilstücks 24 eine Drehachse 30 vorgesehen. Der Träger 28 umfasst ein Profilstück 31, das ähnlich wie das Profilstück 25 ausgestaltet ist, und ein weiteres Profilstück 32. Die Profilstücke 31 und 32 sind nebeneinander fluchtend angeordnet, um eine gemeinsame Gleit- oder Auflageebene für das zu schneidende Objekt zu bilden. Der U-förmige Trägerrahmen 23, 24, 25 und das Rahmenstück 28 vervollständigen einen rechtwinkligen Rahmen, und die Drehachsen 29 und 30 befinden sich in einer Gerade, die in Längsrichtung durch das Profilstück 31 verläuft.

Die Profilstücke 31 und 32 sind miteinander und das Profilstück 31 mit zwei Befestigungselementen 33, 34 festverbunden, die zur Fixierung des Schneidgerätes an einer Wand dienen. Im Profilstück 32 ist ein länglicher Spalt 35 vorhanden. Der untere Bereich des Trägers 28 weist eine Erweiterung 36 auf, die mit einer Strebe oder Distanzstange 37 artikuliert verbunden ist, deren anderes Ende am Profilstück 24 verschiebbar befestigt werden kann, um den Winkel zwischen der durch die Profilstücke 23, 24, 25 definierten Ebene und einer Referenzebene des Trägers 28 ändern zu können.

Im unteren Bereich des Trägers 28 ist eine sich nach hinten erstreckende längliche mit ihm artikuliert verbundene Leiste 38 vorhanden, die auch mit einer Strebe oder Distanzstange 39 artikuliert verbunden ist, deren anderes Ende beim Profil 31 verschiebbar befestigt werden kann, um den Winkel zwischen der Leiste 38 und dem Träger 28 ändern zu können. Die Leiste 38 weist vorzugsweise ein L-förmiges Profil auf und ist mit Längsmarkierungen in der Art eines Massstabs versehen. Mit dem anderen Ende der Leiste 38 ist eine weitere Leiste 40 artikuliert verbunden, die ebenfalls Massstabmarkierungen aufweisen kann. Mit dem Träger 28 ist auch eine sich nach vorn erstreckende längliche Leiste 41 verbunden, die ebenfalls Massstabmarkierungen aufweisen kann.

Die Position des Trägerrahmens und daher auch der Vorrichtung 1 kann in einem Winkel zur Wand gerichtet sein. Diese Position wird durch die Distanzstange 37 bestimmt.

In Fig. 2 sind insbesondere die Partien 3, 4 und 5, die Verbindungselemente 12 und 13, die Führungseinrichtungen 14 und 15, der Schneiddraht 11 und der Drahtspanner 19 sichtbar. Die Führungseinrichtungen 14 und 15, die auch Laufrollensupporte oder Schlitten genannt werden, sind mit je zwei Rollen 42, 43 bzw. 44, 45 versehen.

Fig. 3 zeigt insbesondere, dass die Partien 23 und 24 mindestens aussenseitig mit je einer Führung oder Nut 46 bzw. 47 versehen sind, die zur Führung der Rollen 42 bis 45 dienen. Anstelle von den Rollen 42 bis 45 könnten auch nur zwei Rollen oder eine Gleitführung vorgesehen sein.

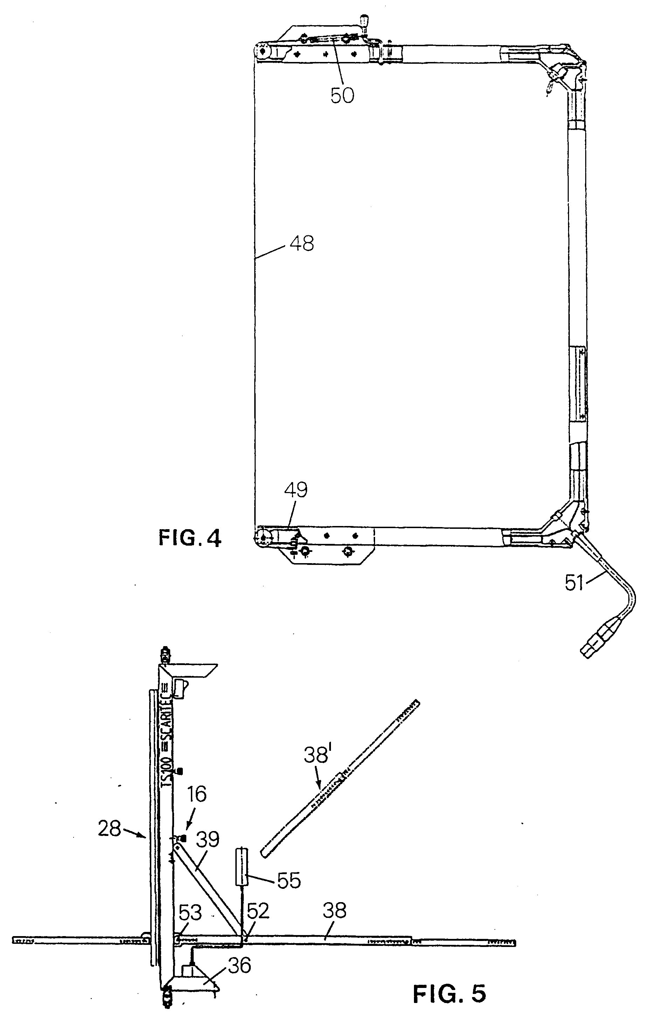

Fig. 4 zeigt eine Ausführung bei der ein Heizdraht 48 einerseits mit dem einen Ende eines ersten Leiters 49 und andererseits mit dem anderen Ende eines zweiten an Masse angeschlossenen Leiters 50 verbunden ist. Das Speisekabel ist mit dem Bezugszeichen 51 angedeutet.

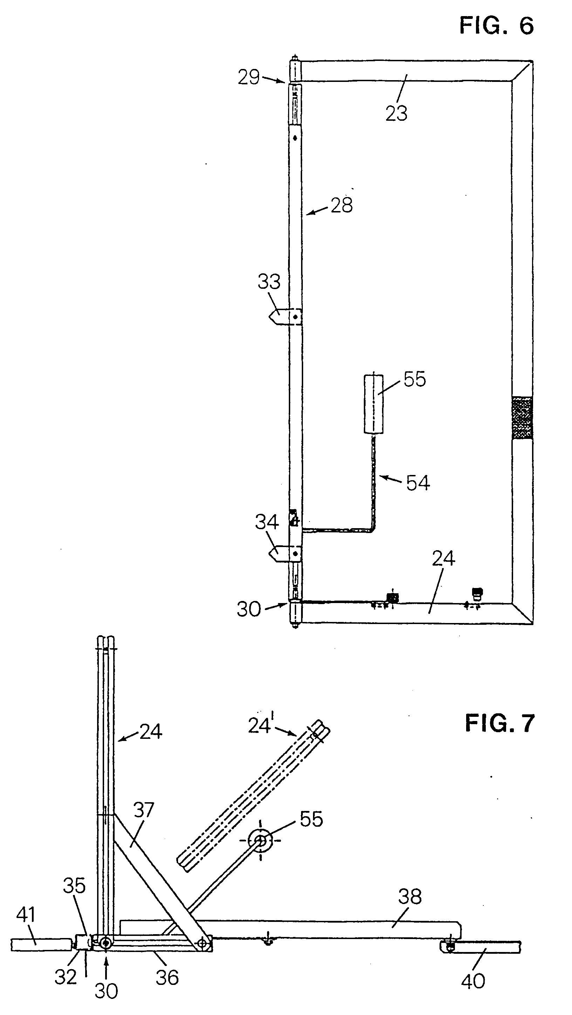

Fig. 5 zeigt insbesondere die Distanzstange 39 und die Artikulation 52 zwischen ihr und der Leiste 38, sowie die Artikulation 53 zwischen der Leiste 38 und dem Träger 28. An der Erweiterung 36 ist ein bewegliches Stück 54 (Fig. 6) mit einem länglichen Zylinder 55 vorgesehen, um die zu schneidende Platte gegen die Wand zu halten. Die Leiste 38 kann um die Achse der Artikulation 53 bis zur Position 38' geschwenkt werden, wobei durch die Arretierung 16 das gleitende Ende der Distanzstange 39 in einer beliebigen Lage entlang dem Träger 28 fixiert werden kann.

Fig. 6 zeigt ein Detail der Drehachsen 29 und 30, um die der Trägerrahmen und mit ihm auch der Bügel 1 geschwenkt werden können. Der Träger 28 ist mit Hilfe der Befestigungselemente 33 und 34 an einer Wand fixierbar.

Fig. 7 zeigt insbesondere die Erweiterung 36 des Profilstücks 31 (Fig. 1) und das mit ihm verbundene Profilstück 32 von unten. In dieser Figur ist der längliche Spalt 35 des Profilstücks 32 gut sichtbar. Das Profilstück 24 kann um die Drehachsen 30 und 29 (Fig. 1) zusammen mit dem Bügel 1 bis zur Position 24' geschwenkt werden, wobei das gleitende Ende der Distanzstange 37 durch die Arretierung 17 (Fig. 1) in einer beliebigen Lage entlang dem Profilstück 24 fixiert werden kann.

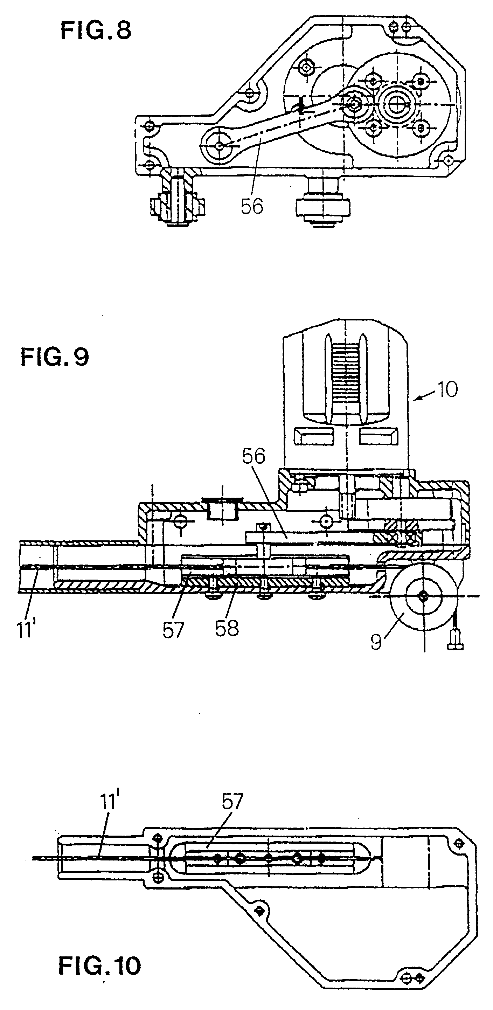

Die Figuren 8 und 9 zeigen eine Pleuelstange 56, mit deren Hilfe die Drehbewegung des Motors in eine oszillierende Bewegung umgewandelt wird. Es ist auch ein Getriebe vorgesehen, um eine hohe Drehbewegung, beispielsweise von 20'000 r/min auf beispielsweise ca. 2'000 r/min, zu reduzieren.

Die Figuren 9 und 10 zeigen eine Kupplungshülse 57, mit deren Hilfe die oszillierende Bewegung der Pleuelstange 56 an den Antriebsdraht 11' übertragen wird. Die Führungshülse 57 gleitet mit wenig Reibung auf einer Gleitführung 58.

Der Schneiddraht kann vorzugsweise ein verdrillter oder durchflochtener Sägedraht sein. Ein solcher Sägedraht kann aus einer Anzahl n = 1,2,3,.... umwickelten Drähten bestehen.

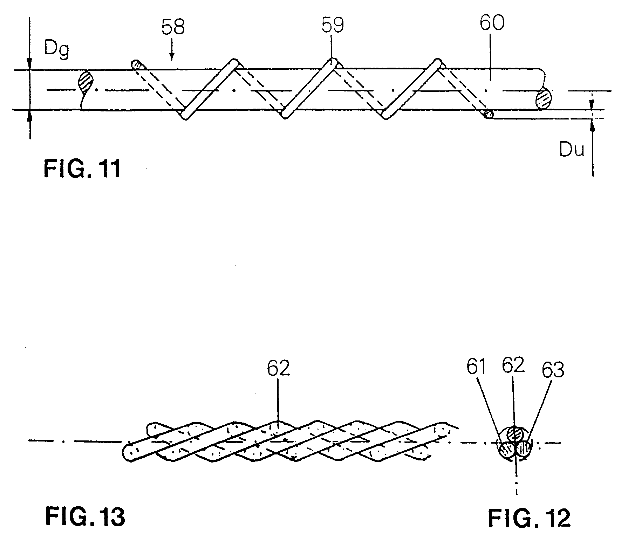

Fig. 11 zeigt einen umwickelten Draht 58, der aus einem mit einem Umwickeldraht 59 umwickelten Grunddraht 60 besteht. In Fig. 11 ist der Durchmesser Dg grösser als der Durchmesser Du des Umwickeldrahtes 59, aber es kann auch umgekehrt sein. Die Drähte 59 und 60 sind vorzugsweise aus Stahl. Beispielsweise sind die Durchmesser Dg und Du in der Grössenordnung von 0,5 mm oder kleiner. Im allgemeinen kann ein Grunddraht mit m = 1,2,3,... Umwicklungen gewickelt sein.

Fig. 12 zeigt im Querschnitt einen Sägedraht mit beispielsweise drei derartigen miteinander verflochtenen Drähten 61, 62, 63 und Fig. 13 eine Seitenansicht dieses Sägedrahtes.

Die erfindungsgemässe Vorrichtung funktioniert folgendermassen:

Die zu schneidende Platte wird flach gegen die Wand auf die Leiste 38 (Fig. 1) gestellt und mit Hilfe des Zylinders 55 (Fig. 6) gehalten, die eine längliche Rolle aus Weichmaterial sein kann. Die Leiste 38 und der Trägerrahmen zusammen mit dem Bügel 1 befinden sich in den entsprechenden Positionen bezüglich der gewünschten Schneidwinkeln. Die Platte oder der zu schneidende Gegenstand wird in der Länge so positioniert, dass ein gewünschter Schnitt erfolgen kann. Zu diesem Zweck dienen die Markierungen der Leisten. Mit eingeschaltetem Motor hat der Schneiddraht 11 eine oszillierende Bewegung. Der oszillierende Schneiddraht wird gegen den Gegenstand gefahren und geschnitten bis er in den Spalt 35 hineinkommt. In diesem Moment fällt das abgetrennte Stück herunter. Die Arbeitsweise der Ausführung mit Heizdraht ist dieselbe mit dem Unterschied, dass die Abtrennung durch thermische statt durch mechanische Energie erfolgt.

Die dargestellten bevorzugten Ausführungen weisen rechtwinklige Rahmen auf, die aber auch bogenförmig ausgestaltet sein können. In einem solchen Fall wären die Partien 3 und 4 bzw. 23 und 24 nur die Endteile des Rahmens oder Teile dieser Endteile. Bei einer bevorzugten Ausführung der Erfindung ist das die Antriebsvorrichtung enthaltende Gehäuse 10 im Endbereich einer der parallelen Partien 3 oder 4 angeordnet.

In einer bevorzugten Ausführung des erfindungsgemässen Schneidgerätes ist der Tragrahmen zumindest angenähert und wenigstens teilweise U-förmig ausgestaltet, und das Schneidgerät umfasst ebenfalls einen zumindest angenähert und wenigstens teilweise U-förmigen Bügelrahmen, wobei Bügelrahmen und Halterahmen untereinander bewegbar verbunden sind, derart, dass eine parallele Verschiebung zwischen den zwei Rahmen möglich ist, und wobei an den U-Schenkeln 23, 24 des Halterahmens 2 ein länglicher Träger 28 schwenkbar angeordnet ist.

In weiterer Ausgestaltung dieser Ausführung sind in diesem Schneidgerät Mittel 37 zur Fixierung eines Winkels zwischen dem Halterahmen 2 und dem Träger 28 innerhalb des variablen Schwenkbereichs vorhanden und im Bereich der U-Schenkel 3, 4 bzw. 23, 24 Führungseinrichtungen 14, 15 vorgesehen, die eine parallele Verschiebung zwischen dem Halterahmen und dem Bügelrahmen in der Richtung der U-Schenkel 3, 4 bzw. 23, 24 ermöglichen, und wobei die durch die U-Schenkel des Bügelrahmens bzw. des Halterahmens definierten Ebenen zwei nahe parallele Ebenen sind. Dabei können beispielsweise der Bügelrahmen und/oder der Halterahmen ziemlich flach ausgestaltet sein, wobei vorzugsweise der Abstand zwischen den zwei U-Schenkeln 23, 24 des Halterahmens 2 zumindest angenähert gleich gross wie der Abstand zwischen den zwei U-Schenkeln 3, 4 des Bügelrahmens sein kann.

## Patentansprüche

1. Schneidegerät zum Schneiden von Stücken aus Weichmaterial, umfassend einen parallel verschiebbar geführten Bügel (3,4,5) mit zwei parallelen Bügelschenkeln (3,4) und einem Verbindungssteg (5), wobei zwischen den freien Enden der Bügelschenkel (3,4) ein Schneiddraht (11,48) gespannt ist, sowie eine rahmenförmige Halteeinrichtung mit zwei parallelen Rahmenschenkeln (23,24), die am einen Ende durch eine sie verbindende Partie (25) und am anderen Ende durch einen länglichen Träger (28) miteinander verbunden sind, wobei am Träger (28) eine Führungsleiste (38) zur Führung des zu schneidenden Stücks befestigt ist, dadurch gekennzeichnet, dass die Bügelschenkel (3,4) mit je einer Führungseinrichtung (14,15) in Führungen (46,47) der Rahmenschenkel (23,24) geführt sind, und dass der Träger (28) an den Rahmenschenkeln (23,24) um eine zum Schneiddraht (11,48) parallele Achse schwenkbar und arretierbar befestigt ist.

2. Schneidgerät nach Anspruch 1, dadurch gekennzeichnet, dass der Schneiddraht (11;48) durch einen im Innern des Bügels untergebrachten Verbindungsdraht verlängert ist.

3. Schneidgerät nach Anspruch 2, dadurch gekennzeichnet, dass der Verbindungsdraht als Antriebsdraht (11') ausgebildet ist, dass der Schneiddraht (11) und der Antriebsdraht eine Schleife bilden, und dass eine Antriebsvorrichtung vorhanden ist, um an den Antriebsdraht und damit auch an den Schneiddraht (11) eine mechanische oszillierende Bewegung zu tibertragen.

4. Schneidgerät nach Anspruch 3, dadurch gekennzeichnet, dass der Bügel je eine Rolle (8,9) im Endbereich der Bügelschenkel (3,4) und je eine Rolle (8',9') im Bereich von zwei Eckverbindungen (6,7) des Bügels umfasst, um den Antriebsdraht gespannt zu halten.

5. Schneidgerät nach Anspruch 2, dadurch gekennzeichnet, dass der Schneiddraht ein Heizdraht (48) und der Verbindungsdraht eine elektrische Leitung ist, durch die ein elektrischer Strom dem Heizdraht (48) zugeführt wird.

6. Schneidgerät nach einem der Ansprüche 1 bis 4, dadurch gekennzeichnet, dass der Schneiddraht (11) ein Sagedraht ist, der wenigstens einen Draht (58) aufweist, der mindestens einen mit wenigstens einem Umwickeldraht (59) umwickelten Grunddraht (60) umfasst, oder der mindestens zwei verflochtenen Drähte (61,62;62,63) umfasst.

7. Schneidgerät nach einem der Ansprüche 1-6, dadurch gekennzeichnet, dass eine Distanzstange (37) vorhanden ist, um den Träger (28), in einer Schwenklage bezüglich der parallelen Rahmenschenkel (23,24) des Halterahmens (2) zu fixieren.

8. Schneidgerät nach einem der Ansprüche 1 bis 7, dadurch gekennzeichnet, dass der Träger (28) einen länglichen Spalt (35) aufweist, in den der Schneiddraht (11;48) am Ende des Schneidweges eingeführt werden kann.

9. Schneidgerät nach einem der Ansprüche 1 bis 8, dadurch gekennzeichnet, dass die Führungsleiste (38) am Träger (28) schwenkbar angeordnet ist.

## Claims

1. Cutting unit for cutting pieces from soft material, comprising a stirrup (3, 4, 5), which is guided so that it can be displaced in a parallel manner and which has two parallel stirrup arms (3, 4) and a connecting strut (5), a cutting wire (11, 48) being tensioned between the two free ends of the stirrup arms (3, 4), and comprising a frame-shaped holding device with two parallel frame arms (23, 24), which are connected together at one end by a part (25) which connects them and, at the other end, by an elongated load-carrying member (28), a guide strip (38) for guiding the piece to be cut being fastened to the load-carrying member (28), characterised in that the stirrup arms (3, 4) are each guided by a guide device (14, 15) in guides (46, 47) of the frame arms (23, 24) and in that the load-carrying member (28) is fastened to the frame arms (23, 24) so that it can be pivoted about an axis parallel to the cutting wire (11, 48) and so that it can be arrested.

2. Cutting unit according to Claim 1, characterised in that the cutting wire (11; 48) is extended by a connecting wire accommodated within the stirrup.

3. Cutting unit according to Claim 2, characterised in that the connecting wire is configured as a driving wire (11'), in that the cutting wire (11) and the driving wire form a loop and in that a driving appliance is present in order to transfer a mechanically oscillating motion to the driving wire and therefore also to the cutting wire (11).

4. Cutting unit according to Claim 3, characterised in that the stirrup encompasses one roller (8, 9) each in the end region of the stirrup arm (3, 4) and one roller (8', 9') each in the region of two corner connections (6, 7) of the stirrup in order to keep the driving wire tensioned.

5. Cutting unit according to Claim 2, characterised in that the cutting wire is a hot wire (48) and the connecting wire is an electrical conductor through which an electric current is supplied to the hot wire (48).

6. Cutting unit according to one of Claims 1 to 4, characterised in that the cutting wire (11) is a saw wire, which has at least one wire (58) which encompasses a main wire (60) which is wound around by at least one winding wire (59), or which encompasses at least two entwined wires (61, 62; 62, 63).

7. Cutting unit according to one of Claims 1 to 6, characterised in that a distance rod (37) is present in order to fix the load-carrying member (28) in a pivoted position relative to the parallel frame arm (23, 24) of the holding frame (2).

8. Cutting unit according to one of Claims 1 to 7, characterised in that the load-carrying member (28) has an elongated gap (35) into which the cutting wire (11; 48) can be introduced at the end of the cutting path.

9. Cutting unit according to one of Claims 1 to 8, characterised in that the guide strip (38) is pivotably arranged on the load-carrying member (28).

## Revendications

1. Dispositif pour le découpage de pièces en matière molle, comprenant un étrier (3, 4, 5) guidé en déplacement parallèle avec deux branches d'étrier parallèles (3, 4) et une barre de liaison (5), un fil à découper (11, 48) étant tendu entre les extrémités libres des branches d'étrier (3, 4), ainsi qu'un dispositif de support en forme de châssis ou cadre avec deux branches de cadre parallèle (23, 24) qui sont raccordées sur une extrémité par une partie de liaison (25) et sur l'autre extrémité par une traverse allongée (28), une glissière de guidage (38) étant fixée sur la traverse (28) pour le guidage de l'élément à découper, caractérisé en ce que les branches d'étrier (3, 4) sont guidées avec respectivement un dispositif de guidage (14, 15) dans des guidages (46, 47) des branches de cadre (23, 24) et en ce que la traverse (28) est fixée sur les branches de cadre (23, 24) de façon pivotante et bloquable autour d'un axe parallèle au fil de découpage (11, 48).

2. Dispositif pour le découpage selon la revendication 1, caractérisé en ce que le fil de découpage (11, 48) est prolongé par un fil de liaison logé à l'intérieur de l'étrier.

3. Dispositif pour le découpage selon la revendication 2, caractérisé en ce que le fil de découpage est conçu comme fil d'entraînement (11') en ce que le fil de découpage (11) et le fil d'entraînement forment une boucle et en ce qu'il est prévu un dispositif d'entraînement afin de transmettre au fil d'entraînement et par conséquent également au fil de découpage (11) un mouvement d'oscillation mécanique.

4. Dispositif pour le découpage selon la revendication 3, caractérisé en ce que l'étrier comprend respectivement un rouleau (8, 9) dans la zone d'extrémité de la branche d'étier (3, 4) et respectivement un rouleau (8', 9') dans la zone de deux liaisons de coin (6, 7) de l'étrier afin de maintenir le fil d'entraînement tendu.

5. Dispositif pour le découpage selon la revendication 2, caractérisé en ce que le fil de découpage est un fil chauffant (48) et le fil de liaison est une conduite électrique par laquelle est amené un courant électrique au fil de chauffage (48).

6. Dispositif pour le découpage selon l'une des revendications 1 à 4, caractérisé en ce que le fil de découpage (11) est un fil acier qui comporte au moins un fil (58) qui comprend au moins un fil de base (60) enroulé autour d'au moins un fil d'enroulement (59) et qui comprend au moins deux fils tressés (61, 62; 62, 63).

7. Dispositif pour le découpage selon l'une des revendications 1 à 6, caractérisé en ce qu'il est prévu une tige d'entretoise (37) afin de fixer la traverse (28) dans une position de basculement par rapport à la branche de cadre parallèle (23, 24) du cadre de support (2);

8. Dispositif pour le découpage selon l'une des revendications 1 à 7, caractérisé en ce que la traverse (28) présente une fente allongée (35) dans laquelle peut être introduit le câble de découpage (11, 48) à l'extrémité de la course de découpage.

9. Dispositif pour le découpage selon l'une des revendications 1 à 8, caractérisé en ce que la glissière de guidage (38) est disposée de façon pivotante sur la traverse (28).
